Europäisches Patentamt

European Patent Office

Office européen des brevets

(11) Veröffentlichungsnummer: **0 043 559**
**B1**

# (12) EUROPÄISCHE PATENTSCHRIFT

(45) Veröffentlichungstag der Patentschrift:
**16.10.85**

(21) Anmeldenummer: **81105131.7**

(22) Anmeldetag: **02.07.81**

(51) Int. Cl.⁴: **H 02 B  1/10**

(54) **Vorrichtung zum Befestigen von elektrischen Geräten über einer Platte.**

(30) Priorität: **04.07.80  DE 3025330**

(43) Veröffentlichungstag der Anmeldung:
**13.01.82 Patentblatt 82/2**

(45) Bekanntmachung des Hinweises auf die Patenterteilung:
**16.10.85 Patentblatt 85/42**

(84) Benannte Vertragsstaaten:
**AT BE CH DE FR GB IT LI LU NL SE**

(56) Entgegenhaltungen:
**DE - A - 1 775 270**
**DE - A - 2 546 176**
**FR - A - 1 342 747**
**FR - A - 2 013 402**
**FR - A - 2 368 812**
**GB - A - 544 284**
**US - A - 3 047 263**

(73) Patentinhaber: **Square D Starkstrom GmbH,**
**D-5277 Marienheide-Rodt (DE)**

(72) Erfinder: **Grunst, Heinz, Hubertusweg 24,**
**D-5277 Marienheide (DE)**

(74) Vertreter: **Köhne, Friedrich, Dipl.-Ing.,**
**Postfach 250265 Lothringer Strasse 81,**
**D-5000 Köln 1 (DE)**

ACTORUM AG

## Beschreibung

Die Erfindung bezieht sich auf eine Vorrichtung zum Befestigen von elektrischen Geräten, insbesondere Schalt-, Befehls- oder Meldegeräten, über einer Platte, wie Bodenplatte eines Schaltkastens oder Montageplatte eines Schaltschrankes oder Schalttafel, an mindestens einer parallel zur Platte verlaufenden Befestigungsschiene für die Geräte mittels zweier senkrecht auf der Platte angebrachten Stützen je Befestigungsschiene, wobei jede Stütze einen längsverlaufenden Schlitz aufweist, in welchen ein mittlerer Teil eines Verbindungsstückes höhenverstellbar eingreift und dort geführt ist, und ein parallel zur Platte verlaufender, zur Befestigungsschiene hin gerichteter Arm des Verbindungsstückes mit dem Ende der Befestigungsschiene durch senkrecht zur Platte gerichtete Schraubverbindung verbunden ist.

Eine derartige Vorrichtung ist aus der FR-A-2 368 812 bekannt. Bei dieser bekannten Vorrichtung weist der längsverlaufende Schlitz jeder Stütze an beiden Längsseiten je eine Verzahnung auf. Das jeweilige Verbindungsstück besitzt eine entsprechende Verzahnung. Zum Einsetzen wird das Verbindungsstück in einer Schrägstellung von oben über die Stütze geschoben und sodann einwärts geschwenkt, so dass die Verzahnung des Verbindungsstückes in der gewählten Höhenlage in die Verzahnung des Schlitzes eingreift. Sodann kann die Befestigungsschiene durch die senkrecht zur Platte gerichteten Schrauben an dem jeweiligen nach innen ragenden Arm des Verbindungsstückes angeschraubt werden. Das Herstellen der Verzahnung ist sehr aufwendig und ein Höhenverstellen der Verbindungsstücke und der Befestigungsschiene kann nur stufenweise entsprechend der Verzahnung erfolgen. Da zwischen den ineinandergreifenden Verzahnungen ein Bewegungsspiel vorhanden sein muss, kann kein fester rüttelsicherer Sitz der Befestigungsschiene erreicht werden. Wenn man eine Höhenverstellung vornehmen will, muss die Befestigungsschiene mit den an ihr angebrachten Geräten vollständig von den Verbindungsstücken gelöst werden, damit diese einwärts geschwenkt werden können und die Verzahnungen ausser Eingriff kommen. Die Bedienung der bekannten Vorrichtung ist dadurch sehr umständlich.

Des weiteren ist aus der FR-A-1 342 747 eine Vorrichtung bekannt, die zum Befestigen von Tragschienen an senkrecht auf einer Bodenfläche stehenden Stützen dient. Hier sind Schraubverbindungen zwischen den Stützen und der Befestigungsschiene vorhanden, wobei die Schrauben senkrecht zur Bodenfläche gerichtet angeordnet sind und mit Klemmstücken zusammenwirken, die derart ausgebildet sind, dass durch Festziehen der Schrauben die Stützen mit der Befestigungsschiene durch Klemmwirkung fest verbunden sind. Die vorgenannten Stützen sind als Rohre mit rechteckigem Querschnitt ausgebildet. Das betreffende Verbindungsstück ist als achteckige Platte mit einem rechteckigen Loch und einem am Rand des Loches nach oben hin ragenden Flansch ausgebildet. In dieser Platte sind Gewindebohrungen eingearbeitet, in die jeweils eine vertikale Schraube von oben her eingeschraubt werden kann. Die Schraube wirkt mit einer deformierbaren Mutter zusammen, die als gebogene Blattfeder ausgebildet ist. Beim Festschrauben der Schraube kann sich die Blattfeder mit dem einen Ende an der Aussenwandung des Rohres abstützen. Das andere Ende der Blattfeder hat aber kein Gegenlager. Das Ergebnis ist, dass die Blattfeder keine sichere Festklemmung bewirkt, vielmehr eine Schrägstellung der Schraube und der zu befestigenden Teile verursacht. Wenn die Blattfeder aus Metall oder in der Praxis aus Federstahl hergestellt ist, wird eine Beschädigung der Gewindegänge der Schrauben nicht zu vermeiden sein.

Ferner ist aus der DE-A-1 775 270 eine Klemmvorrichtung zur Befestigung von Tragarmen, Flanschen, Traversen oder dergleichen an Stangen bekannt. Diese Klemmvorrichtung besteht im wesentlichen aus einem halbkreisförmigen Ring, welcher die vertikale Stange teilweise umgibt und welcher mit einer Keilfläche versehen ist, mit der ein kegelstumpfförmiger Ring zusammenwirkt, der seinerseits durch eine Schraube auf die Keilfläche angezogen werden kann, wobei die Schraube in einer vertikalen Gewindebohrung des zu befestigenden Bauteiles sitzt. Das zu befestigende Bauteil ist mit einer Bohrung versehen, so dass es von dem einen Ende der Stange über dieses geschoben werden kann. Da die Bohrung ein Bewegungsspiel gegenüber der Stange haben muss und die wirksamen Klemmflächen eines Teiles der Bohrung einerseits und der Innenfläche des halbkreisförmigen Ringes einerseits in unterschiedlichen Höhen liegen, kann es leicht zu Verkantungen und zu einem nicht genauen Klemmsitz kommen, was sich vor allem dann störend auswirkt, auch wenn die Abweichungen nur gering sind, wenn das betreffende Bauteil an zwei mit Abstand voneinander befindlichen Stützen befestigt werden soll.

Ausgehend von der zu Anfang beschriebenen Vorrichtung liegt der Erfindung die Aufgabe zugrunde eine Vorrichtung zum Befestigen von elektrischen Geräten zu schaffen, die einmal bei engsten Raumverhältnissen eine einfache Bedienung und sichere Halterung der Befestigungsschiene an den beiden Stützen gestattet und zum anderen eine stufenlose Höheneinstellung der Befestigungsschiene gegenüber der Grundplatte zur Montageerleichterung und Anpassung an unterschiedliche Baulängen der Geräte ermöglicht.

Die gestellte Aufgabe wird erfindungsgemäss dadurch gelöst, dass das Verbindungsstück als Kreuzstück ausgebildet ist, dessen senkrecht zur Platte verlaufenden Arme in dem Schlitz der Stütze geführt sind, und dass der von der Befestigungsschiene weg gerichtete Arm des Kreuzstückes eine Gewindebohrung und an seinem Ende auf der der Bodenplatte abgewandten Seite eine abgewinkelte Anschlagsleiste aufweist, zwischen der und der zugeordneten Stütze sich ein als gewölbte Federplatte ausgebildetes, mit einer ge-

windelosen Bohrung versehenes Klemmstück er-streckt, das bei Einschrauben einer von der der Bodenplatte abgewandten Seite her durch die Bohrung durchgeführten Schraube in die Gewindebohrung zwischen Stütze und Anschlagleiste verspannt wird und so das Verbindungsstück an der Stütze festlegt.

Eine weitere Lösung der gestellten Aufgabe wird dadurch erzielt, dass der von der Befesti-gungsschiene weg gerichtete, eine Gewindeboh-rung aufweisende Arm des Kreuzstückes statt der abgewinkelten Anschlagleiste und des als gewölbte Federplatte ausgebildeten Klemmstückes angrenzend an die senkrecht zur Platte verlaufenden Arme einen Schlitz mit einer von den senkrecht zur Platte verlaufenden Armen entfernt liegenden ersten Schrägfläche aufweist, dass in diesen Schlitz ein abgewinkelter Schenkel eines massiv ausgebildeten Klemmstückes mit einer der ersten entsprechenden zweiten Schrägfläche eingreift, das mit einer gewindelosen Bohrung versehen ist, und dass bei Einschrauben einer von der der Bodenplatte abgewandten Seite her durch diese Bohrung durchgeführten Schraube in die Gewindebohrung der abgewinkelten Schenkel zwischen Stütze und der Schrägfläche des Schlitzes verspannt wird und so das Verbindungsstück an der Stütze festlegt.

Vorteilhafte Ausgestaltung dieser beiden Lösungen ergeben sich aus den Unteransprüchen 2 und 4.

In der Zeichnung sind Ausführungsbeispiele der Erfindung im Schema dargestellt, und zwar zeigen.

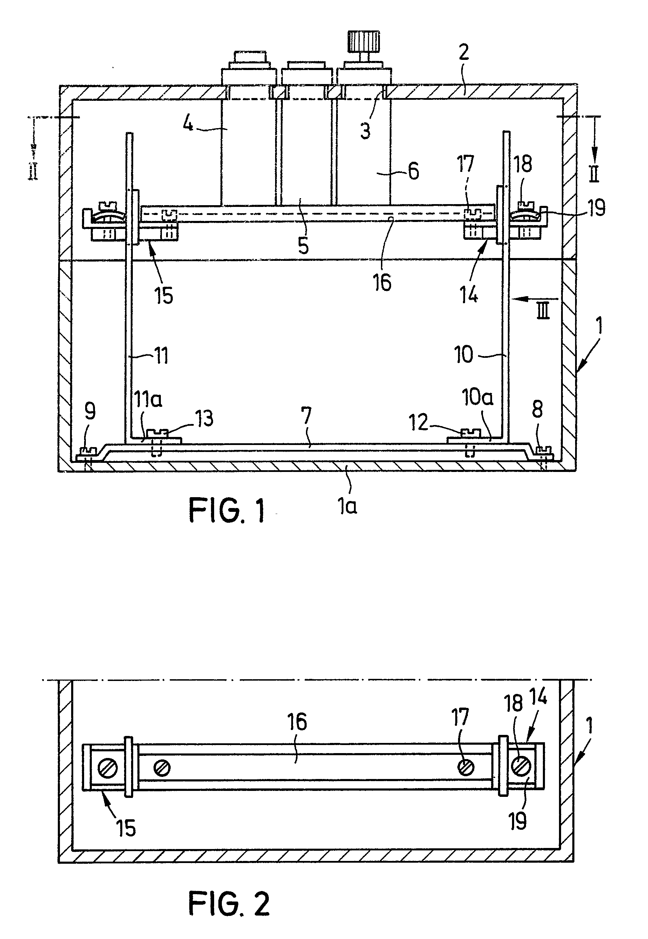

Fig. 1 einen Vertikalschnitt durch einen Schaltkasten,

Fig. einen Teilquerschnitt hierzu gemäss Schnittlinie II–II in Fig. 1,

Fig. 3 eine Seitenansicht auf eine Stütze in Rich-tung des Pfeiles III in Fig. 1,

Fig. 4 einen Teilschnitt gemäss Schnittlinie IV–IV in Fig. 3 in vergrössertem Massstab, und

Fig. 5 einen Teilschnitt entsprechend Fig. 4, der sich auf die zweite Lösung bezieht.

In der Zeichnung ist ein Schaltkasten dargestellt. Die erfindungsgemässe Vorrichtung kann aber auch gleichermassen Anwendung finden bei Schaltschränken, Schalttafeln, Schaltpulten u. dgl.

Der Schaltkasten besteht aus einem Gehäuseunterteil 1 mit einer Bodenplatte 1a und einem durch nicht gezeichnete Schrauben auf das Gehäuseunterteil aufschraubbaren Deckel 2, der mit einer Reihe von Bohrungen 3 versehen ist, durch den die elektrischen Geräte 4, 5 und 6 mit ihrem Bedienungsteil hindurchragen. In Figur 1 sind nur drei elektrische Geräte 4, 5 und 6 gezeichnet, jedoch können den Platzverhältnissen entsprechend beliebig viele Geräte reihenweise nebeneinander angeordnet werden.

Auf der Bodenplatte 1a sind, gegebenenfalls unter Zwischenschaltung einer Trägerschiene 7, die an ihren Enden mit Schrauben 8, 9 mit der Bodenplatte verbunden ist, zwei Stützen 10 und 11 befestigt. Die beiden Stützen 10, 11 bestehen zweckmässigerweise aus stabilen Metallschie-nen, die an ihrem unteren Ende mit Hilfe eines abgewinkelten Teiles 10a und 11a durch Schrauben 12, 13 fest angebracht sind. Auf der Bodenplatte 1a können wie gesagt ausser den beiden zeichnerisch dargestellten Stützen 10, 11 noch je nach den Platzverhältnissen des Schaltkastens beliebig viele Stützen paarweise nebeneinander aufgestellt werden. Je ein Stützenpaar trägt eine Befestigungsschiene 16, die zweckmässigerweise als nach oben offene U-Schiene ausgebildet ist und auf welcher die elektrischen Geräte 4 bis 6 in an sich bekannter Weise befestigt sind.

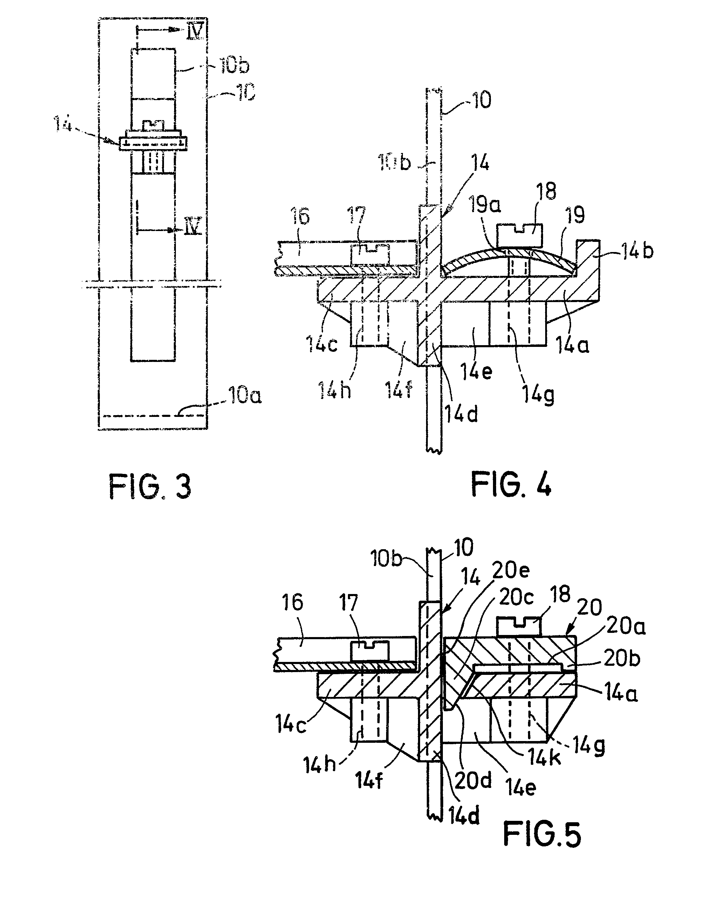

Die feste Verbindung zwischen der Befestigungsschiene 16 und den Stützen 10, 11 erfolgt durch Schrauben 18, die senkrecht zur Bodenplatte 1a gerichtet angeordnet sind und die mit je einem Klemmstück 19 zusammenwirken. Die Klemmstücke sind derart ausgebildet, dass durch Festziehen der Schrauben 18 die Stützen mit der Befestigungsschiene durch Klemmwirkung fest verbunden sind. Gemäss den Fig. 3 und 4 ist das Klemmstück 19 als nach oben hin gewölbte Federplatte ausgebildet. Jedes Klemmstück 19 ist mit einer Bohrung 19a zum Hindurchführen der Schraube 18 versehen, wobei die Bohrung so gross bemessen ist, dass ein Bewegungsspiel gegeben ist. Das Klemmstück liegt auf einem nach aussen ragenden Arm 14a eines Kreuzstückes 14 auf.

Anhand der Figuren 3 und 4 sei nachfolgend das rechte Befestigungsende der Befestigungsschiene 16 mit der Stütze 10 gemäss Figur 1 erläutert, jedoch gilt das gleiche auch für das linke Befestigungsende mit dem Kreuzstück 15, welches spiegelbildlich zu dem Kreustück 14 angeordnet ist. Der nach aussen ragende Arm 14a des Kreuzstükkes 14 ist mit einem Gewinde 14g für die Schraube 18 versehen. Dieser Arm 14a weist eine abgewinkelte Anschlagleiste 14b auf. Wie Figur 4 verdeutlicht, stützt sich das Klemmstück 19 mit seinen beiden einander gegenüberliegenden Rändern bei angezogener Schraube einerseits an der Anschlagleiste 14b und andererseits an der Aussenfläche der Stütze 10 ab. Der nach innen ragende Arm 14c des Kreuzstückes 14 ist mittels einer Schraube 17 mit dem Ende der Befestigungsschiene 16 verbunden.

Das mittlere, senkrecht zur Bodenplatte 1a verlaufende Teil 14d des Kreuzstückes 14 ist in einem längsverlaufenden Schlitz 10b der Stütze 10 geführt. Wenn die Schraube 18 mindestens teilweise herausgeschraubt wird und somit das Klemmstück 19 infolge der innewohnenden Federwirkung weiter nach oben hin gewölbt ist, ist die Klemmwirkung aufgehoben und man kann dann leicht eine Höhenverstellung des Kreuzstückes mitsamt der Befestigungsschiene 16 vornehmen. Es versteht sich, dass die Breite des Klemmstückes 19 so gewählt ist, dass es den Schlitz 10b der Stütze überspannt und an der Aussenfläche der Stütze zur Anlage kommt.

Nach einer vorteilhaften Ausgestaltung der Erfindung sind die Arme 14a, 14c des Kreuzstückes 14 auf der nach der Bodenplatte 1a zu liegenden Seite mit Verstärkungsrippen 14e und 14f versehen. Die Gewindebohrungen 14g und 14h für die Schrauben 18 bzw. 17 sind von den Armen 14a, 14c ausgehend durch diese Verstärkungsrippen nach unten hindurchgeführt.

Nach Abnehmen des Gehäusedeckels 2 sind die Schrauben 18 mit den Klemmstücken 19 frei und ungehindert zugänglich. Man kann auf diese Weise die Befestigungsschiene 16 bequem an den Stützen 10, 11 anbringen, gegebenenfalls eine Höhenverstellung vornehmen und schliesslich die Schrauben leicht nachziehen, falls diese sich nach längerem Transport des fabrikmässig vollständig montierten Schaltkastens etwas gelöst haben sollten.

Figur 5 zeigt ein Ausführungsbeispiel der zweiten Lösung zur Erzielung einer Klemmwirkung, wobei soweit diese mit der nach Figur 4 übereinstimmt, für entsprechende Teile die gleichen Bezugszeichen verwendet worden sind und hierfür die obige Beschreibung sinngemäss gilt. Das hier gezeigte Kreuzstück 14 hat an seinem Arm 14a keine Anschlagleiste 14b, sondern läuft nach aussen ebenflächig aus. Dafür ist im mittleren Bereich des Armes 14a nahe dem mittleren Teil 14d des Kreuzstückes 14 ein Schlitz 14c mit einer Schrägfläche eingearbeitet. In diesen Schlitz 14c greift ein abgewinkelter Schenkel 20c eines massiv ausgebildeten Klemmstückes 20 ein und zwar so, dass eine Schrägfläche 20d dieses Schenkels an der entsprechenden Schrägfläche des Schlitzes 14c in Klemmstellung anliegt. Sodann wird die Anlagefläche 20e des Klemmstückes 20 an das mittlere Teil 14d des Kreuzstückes 14 angepresst, und zwar auch hier durch Wirkung der Schraube 18.

In vorteilhafter Ausgestaltung weist das Klemmstück 20 an dem von dem abgewinkelten Schenkel 20c abliegenden Ende eine senkrecht zur Bildebene der Figur 5 verlaufende Stützleiste 20b auf. Auf diese Weise entsteht zwischen dieser Stützleiste 20b und dem Winkelstück 20c eine Aussparung 20a. Auf diese Weise wird eine sehr exakte Halterung des Klemmstückes in der Klemmstellung gewährleistet.

**Patentansprüche**

1. Vorrichtung zum Befestigen von elektrischen Geräten (4, 5, 6), insbesondere Schalt-, Befehlsoder Meldegeräten, über einer Platte (1a), wie Bodenplatte eines Schaltkastens oder Montageplatte eines Schaltschrankes oder Schalttafel, an mindestens einer parallel zur Platte (1a) verlaufenden Befestigungsschiene (16) für die Geräte mittels zweier senkrecht auf der Platte angebrachten Stützen (10, 11) je Befestigungsschiene (16), wobei jede Stütze (10, 11) einen längsverlaufenden Schlitz (10b) aufweist, in welchen ein mittlerer Teil eines Verbindungsstückes (14, 15) höhenverstellbar eingreift und dort geführt ist, und ein parallel zur Platte (1a) verlaufender, zur Befestigungsschiene (16) hin gerichteter Arm (14c) des Verbindungsstückes (14, 15) mit dem Ende der Befestigungsschiene durch senkrecht zur Platte gerichtete Schraubverbindungen (17) verbunden ist, dadurch gekennzeichnet, dass das Verbindungsstück (14, 15) als Kreuzstück ausgebildet ist, dessen senkrecht zur Platte (1a) verlaufenden Arme (14d) in dem Schlitz (10b) der Stütze (10, 11) geführt sind, und dass der von der Befestigungsschiene (16) weg gerichtete Arm (14a) des Kreuzstückes eine Gewindebohrung (14g) und an seinem Ende auf der der Bodenplatte (1a) abgewandten Seite eine abgewinkelte Anschlagleiste (14b) aufweist, zwischen der und der zugeordneten Stütze (10, 11) sich ein als gewölbte Federplatte ausgebildetes, mit einer gewindelosen Bohrung (19a) versehenes Klemmstück (19) erstreckt, das bei Einschrauben einer von der der Bodenplatte (1a) abgewandten Seite her durch die Bohrung (19a) durchgeführten Schraube (18) in die Gewindebohrung (14g) zwischen Stütze (10, 11) und Anschlagleiste (14b) verspannt wird und so das Verbindungsstück (14, 15) an der Stütze (10, 11) festlegt.

2. Vorrichtung nach Anspruch 1, dadurch gekennzeichnet, dass die parallel zur Bodenplatte (1a) verlaufenden Arme (14a, 14c) der Kreuzstükke auf der der Platte (1a) zugewandten Seite mit Verstärkungsrippen (14e, 14f) versehen sind, durch die Gewindebohrungen (14h) für die Schraubverbindung (17) mit der Befestigungsschiene (16) und die Gewindebohrungen (14g) für die Halterung des Klemmstückes (19) hindurchgehen.

3. Vorrichtung nach Anspruch 1, dadurch gekennzeichnet, dass der von der Befestigungsschiene (16) weg gerichtete, eine Gewindebohrung (14g) aufweisende Arm (14a) des Kreuzstükkes statt der abgewinkelten Anschlagleiste (14b) und des als gewölbte Federplatte ausgebildeten Klemmstückes (19) angrenzend an die senkrecht zur Platte (10) verlaufenden Arme (14d) einen Schlitz (14c) mit einer von den senkrecht zur Platte (1a) verlaufenden Armen (14d) entfernt liegenden ersten Schrägfläche aufweist, dass in diesen Schlitz (14c) ein abgewinkelter Schenkel (20c) eines massiv ausgebildeten Klemmstückes (20) mit einer der ersten entsprechenden zweiten Schrägfläche (20d) eingreift, das mit einer gewindelosen Bohrung versehen ist, und dass bei Einschrauben einer von der der Bodenplatte (1a) abgewandten Seite her durch diese Bohrung durchgeführten Schraube (18) in die Gewindebohrung (14g) der abgewinkelte Schenkel (20c) zwischen Stütze (10, 11) und der Schrägfläche des Schlitzes (14c) verspannt wird und so das Verbindungsstück (14, 15) an der Stütze (10, 11) festlegt.

4. Vorrichtung nach Anspruch 3, dadurch gekennzeichnet, dass das Klemmstück (20) an dem von dem abgewinkelten Schenkel (20c) abliegenden Ende eine an dem von der Befestigungsschiene (16) weg gerichteten Arm (14a) anliegende Stützleiste (20b) aufweist, so dass zwischen Stützleiste (20b) und abgewinkeltem Schenkel (20c) eine Aussparung (20a) vorhanden ist.

## Claims

1. A device for fixing electrical equipment (4, 5, 6), more especially switching, commanding or signalling equipment, above a plate (1a), such as the base plate of a switch box or the mounting plate of a switch cabinet or switch board, on at least one fixing rail (16), which extends parallel to the plate (1a), for the equipment by means of two supports (10, 11), which are fitted perpendicularly on the plate, for each fixing rail (16), each support (10, 11) having a longitudinally extending slot (10b), in which a central part of a connection piece (14, 15) engages in a vertically adjustable manner and is guided therein, and an arm (14c) of the connection piece (14, 15), which arm extends parallel to the plate (1a) and is directed towards the fixing rail (16), being connected to the end of the fixing rail by screw connections (17) which are directed perpendicularly to the plate, chracterised in that the connection piece (14, 15) is designed as a cross piece whose arms (14d) which extend perpendicularly to the plate (1a) are guided in the slot (10b) in the support (10, 11), and in that the arm (14a) of the cross piece which is directed away from the fixing rail (16) has a tapped hole (14g) and, at its end on the side that is directed away from the base plate (1a), an angled stop bar (14b), between which and the associated support (10, 11) there extends a clamping piece (19) which is designed as a domed spring plate and is provided with a plain hole (19a) and which, when a screw (18), which is passed through the hole (19a) from the side that is directed away from the base plate (1a), is screwed into the tapped hole (14g), is secured in place between the support (10, 11) and the stop bar (14b) and thus fixes the connection piece (14, 15) on the support (10, 11).

2. A device as claimed in Claim 1, characterised in that the arms (14a, 14c) of the cross pieces extending parallel to the base plate (1a) are provided, on the side that is directed towards the plate (1a), with reinforcing ribs (14e, 14f), through which tapped holes (14h) for the screw connection (17) to the fixing rail (16) and the tapped holes (14g) for holding the clamping piece (19) pass.

3. A device as claimed in Claim 1, characterised in that the arm (14a) of the cross piece which is directed away from the fixing rail (16) and has a tapped hole (14g) has, instead of the angled stop bar (14b) and the clamping piece (18) designed as a domed spring plate, adjacent to the arms (14d) extending perpendicularly to the plate (1a) a slot (14c) with a first oblique surface which is remote from the arms (14d) extending perpendicularly to the plate (1a), and in that there engages in this slot (14c) an angled leg (20c) of a solidly designed clamping piece (20) with a second oblique surface (20d) corresponding to the first oblique surface, which piece is provided with a plain hole, and in that, when a screw (18), which is passed through this hole from the side that is directed away from the base plate (1a), is screwed into the tapped hole (14g), the angled leg (20c) is secured in place between the support (10, 11) and the oblique surface of the slot (14c) and thus fixes the connection piece (14, 15) on the support (10,11).

4. A device as claimed in Claim 3, characterised in that the clamping piece (20) has, at the end that is remote from the angled leg (20c), a supporting bar (20b) which bears against the arm (14a) that is directed away from the fixing rail (16) so that a recess (20a) is provided between the supporting bar (20b) and the angled leg (20c).

## Revendications

1. Dispositif pour la fixation d'appareils électriques (4, 5, 6) en particulier d'appareils de distribution, de commande ou d'annonce, sur une plaque (1a) telle que la plaque de fond d'une boîte de distribution ou une plaque de montage d'une armoire de distribution ou d'un tableau de distribution, sur au moins une barre de fixation (16) des appareils, dirigée parallèlement à la plaque (1a), au moyen de deux supports (10, 11) montés perpendiculairement à la plaque pour chaque barre de fixation (16), chaque support (10, 11) présentant une fente longitudinale (10b) dans laquelle entre et est guidée la partie moyenne d'une pièce de jonction (14, 15) déplaçable en hauteur, et un bras (14c), dirigé parallèlement à la plaque (1a) en direction de la barre de fixation (16), de la pièce de jonction (14, 15) étant relié à l'extrémité de la barre de fixation par une jonction à vis (17) dirigée perpendiculairement à la plaque, caractérisé en ce que la pièce de jonction (14, 15) est constituée sous la forme d'une croix dont les bras (14d), dirigés perpendiculairement à la plaque (1a), sont guidés dans la fente (10b) des supports (10, 11) et en ce que le bras (14a) de la croix s'écartant de la barre de fixation (16) comporte un perçage fileté (14g) et à son extrémité du côté écarté de la plaque de fond (1a) un listel de butée (14b) coudé entre lequel et le support (10, 11) correspondant s'étend une pièce de serrage (19) constituée sous la forme d'une plaque élastique cintrée et pourvue d'une perçage sans filetage (19a), laquelle est déformée lors du vissage d'une vis (18) introduite dans le perçage (19a) à partir du côté éloigné de la plaque de fond (1a) dans le perçage fileté (14g) entre le support (10, 11) et le listel de butée (14b) qui lie ainsi solidement la pièce de jonction (14, 15) au support (10, 11).

2. Dispositif selon la revendication 1, caractérisé en ce que les bras (14a, 14c) de la croix dirigés parallèlement à la plaque de fond (1a), sont pourvus, sur le côté tourné vers la plaque (1a), de nervures raidisseuses (14e, 14f), au travers desquelles passent des perçages filetés (14h) destinés à la liaison par vis (17) avec la barre de fixation (16) et les perçages filetés (14g) pour le maintien de la pièce de serrage (19).

3. Dispositif selon la revendication 1, caractérisé en ce que le bras (14a) de la croix dirigé de façon à s'écarter de la barre de fixation (16) et présentant un perçage fileté (14g), comporte, au lieu du listel de butée coudé (14b) et de la pièce de serrage (18) réalisée sous la forme d'une plaque élastique cintrée, et à la limite des bras (14d) dirigés perpendiculairement à la plaque (1a), une fente (14k) comportant une première face inclinée se trouvant éloignée des bras (14d) dirigés perpendiculairement à la plaque (1a), en ce que dans cette fente (14k) entre une branche coudée (20c) d'une pièce de serrage (20) massive avec une deuxième surface inclinée (20d), correspondant à la première, qui est pourvue d'un perçage non fileté, et en ce que lors du vissage d'une vis (18) introduite dans ce perçage du côté écarté de la plaque de fond (1a) dans le perçage fileté (14g), la branche coudée (20c) est déformée entre le support (10, 11) et la surface inclinée de fente (14k) et fixe ainsi solidement la pièce de jonction (14, 15) au support (10, 11).

4. Dispositif selon la revendication 3, caractérisé en ce que la pièce de serrage (20) comporte, à son extrémité écartée de la branche coudée (20c), un listel de soutien (20b) s'appliquant contre le bras (14a) dirigé de façon à s'écarter de la barre de fixation (16), de sorte qu'un évidement (20a) existe entre le listel de soutien (20b) et la branche coudée (20c).

FIG. 1

FIG. 2

FIG. 3

FIG. 4

FIG. 5